(19)

Europäisches Patentamt
European Patent Office
Office européen des brevets

(11) **EP 4 610 503 A1**

(12) **EUROPEAN PATENT APPLICATION**

(43) Date of publication:
**03.09.2025 Bulletin 2025/36**

(21) Application number: 25160338.7

(22) Date of filing: **26.02.2025**

(51) International Patent Classification (IPC):
**F16B 37/14** (2006.01)    **E04B 1/41** (2006.01)

(52) Cooperative Patent Classification (CPC):
**F16B 37/14; B21K 1/64; E04B 1/4121**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2024 IT 202400004621**

(71) Applicant: **Pettarini, Agostino
33047 Remanzacco (UD) (IT)**

(72) Inventor: **Pettarini, Agostino
33047 Remanzacco (UD) (IT)**

(74) Representative: **Giugni, Diego et al
Propria S.r.l.
Via della Colonna, 35
33170 Pordenone (IT)**

(54) **BUSHING FOR ANCHORING SUPPORT STRUCTURES INTO CONCRETE**

(57)    The present invention relates to a bushing (1) for anchoring support structures to concrete. It comprises a shank (2) having a cylindrical cavity (23) with a thread (26) and a head (3) forming a T in longitudinal section. In particular, the bushing allows to anchor to the concrete support structures such as support frames for example for photovoltaic panels. Furthermore, the bushing advantageously allows to improve the performance of resistance against traction stresses and it can be produced through an efficient and cost-effective process.

Fig.1A

**Description**

TECHNICAL FIELD OF THE INVENTION

The present invention relates to a bushing for anchoring support structures to the concrete. In particular, the bushing allows to anchor to the concrete support structures such as support frames for example for photovoltaic panels. Furthermore, the bushing advantageously allows to improve the performance of resistance against traction stresses and it can be produced through an efficient and cost-effective process.

BACKGROUND OF THE INVENTION

Numerous support bushings for various purposes have long been known. Some of them are used for firmly and safely anchoring support frames to the concrete, especially when the structures to be supported are rather cumbersome and heavy. As a matter of fact, usually, these frames consist of frameworks of uprights and crosspieces formed by bars, rods, sections of various sizes which must be appropriately fixed to a concrete base. The fixing is conventionally carried out using various systems such as, especially in the case of frames for photovoltaic panels, screws which are screwed in corresponding bushings which are embedded into the concrete.

Therefore, the bushings are an essential element not only for anchoring but also for supporting very heavy structures and which can be subjected to significant stresses. In particular, the bushings consist of two parts which are variously constrained to each other, and that is a longitudinal shank that is internally hollow and threaded and a head generally arranged transversely to the longitudinal axis of the shank. The head is embedded into the concrete and it represents the retention point, while the shank may also protrude from the concrete platform so as to receive by screwing the threaded shank of the screws of the frames.

It is known that these bushings undergo tensile forces in the direction longitudinal to the engagement between the thread of the screws of the frames and in the counterthread obtained in the shank thereof. Such forces may cause a deformation typically of the hourglass type of the bushing given that they represent a tensile force along the engagement axis. When the tensile forces are rather high, the deformation results in the breakage of the bushing.

In addition, with the aim of creating an anchoring and at the same time anti-rotation rotary product, the current existing products are obtained by assembling two, three or more components with each other, for example cylindrical pipes with through hole assembled with an outer hexagonal head screw which locks a washer with round hole but with outer square geometry. Or, there are used pipes which are broken to a predefined length, laterally compressed so as to partially close the hole, bent and threaded on the part where the hole remained whole.

However, this structure of the bushing is complex to assemble and produce and on the other hand it could at times be hazardous given that it has various weak points represented by the aforementioned joints/connections between the parts.

For example, document FR2307164 discloses a tubular element that is threaded internally to receive a clamping member comprising anchoring means consisting of two flattened areas, that are angularly staggered and arranged one after the other but separated by an undeformable portion so as to form with each of said flattened areas on the other side a first conical anchoring area which opposes the tensile forces and on the side a second conical anchoring area which opposes the compression forces. In this case, the flattened pipe may easily allow axial moisture infiltrations which can hazardously corrode the tubular element and the functionality thereof as a result. Furthermore, the production process starting from a hollow tubular element is demanding and inefficient.

Document GB901681 discloses an anchoring bushing embedded in the concrete comprising an intake that is partially threaded inside and closed at one end. The end carries axial ribs for preventing the rotation of the bushing when embedded in the concrete. The bushing is then provided with means through which it can be fixed to a formwork. Such means are a metal washer attached to the bushing by means of a screw and provided with fixing pins attached to the bushing by means of a screw and provided with reversible fixing pins to the formwork. These means allow an easy anchoring of the bushing to the formwork therefore avoiding demanding operations. Such solution does not seem particularly resistant to tensile forces since it lacks of elements that counteract them.

SUMMARY OF THE INVENTION

Therefore, the main task of the present invention is to provide a bushing for anchoring support structures to the concrete capable of resisting to the tensile forces which can cause hazardous deformations and resulting breakage.

In the context of the present task, an object of the present invention to provide an anchoring bushing that is particularly strong and with high performance.

A second object is to provide an anchoring bushing provided with a structure such to distribute the loads of the forces to which it is subjected.

A third object is to provide a bushing made of a single piece, without external infiltrations that jeopardise the sealing and durability thereof.

A fourth object is to provide an anchoring bushing that is easy and cost-effective to manufacture.

A further object is to provide a method for manufacturing the bushing for anchoring support structures to the concrete that is advantageously practical, efficient and cost-effective.

These and other tasks, objects and advantages outlined above which will be more apparent in the description below, are attained by a bushing for anchoring support structures to the concrete as defined in claim 1. Further advantageous characteristics of the bushing according to the present invention are contained in the dependent claims below.

BRIEF DESCRIPTION OF THE FIGURES

Further characteristics and advantages of present the invention will become more apparent from the following description of an embodiment, provided by way of non-limiting example, with reference to the attached figures, wherein:

- figures 1A-1C respectively show a top axonometric view, a longitudinal cross-sectional lateral view and a top view of a bushing for anchoring support structures to the concrete according to the invention;
- figure 2 shows a partial cross-section lateral view of the engagement of a screw of a structure to be anchored with the bush of figure 1B;
- figure 3 shows a cross-sectional view of the portion of the shank of the bushing of the invention.

DETAILED DESCRIPTION OF THE INVENTION

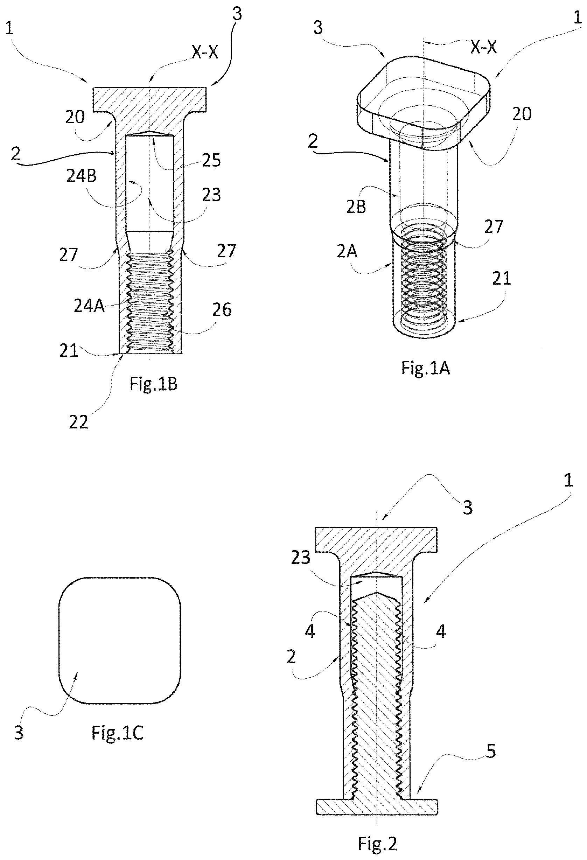

With reference to figure 1A, the reference numeral 1 indicates in its entirety a bushing for anchoring support structures to concrete comprising a straight shank 2 which extends along an axis X-X and a head 3.

The bushing 1 of the invention is preferably made of a single piece derived from a piece of wire made of metal material processed according to the production method described below. In particular, therefore, the head 3 is made of a single piece with the shank 2 or, in other words, the head is made continuous with the shank.

The shank 2 is internally hollow and it extends along the axis X-X from a first 20 to a second 21 end. The first end is preferably connected as a single piece with said head 3 and it is closed, while the second end is opposite to the first and it is provided with an axial opening 22 (figure 1B). Preferably, the shank is generally cylindrical-shaped, but its cross-section could also be otherwise shaped for example polygonal such as square, rectangular or hexagonal-shaped, while maintaining a cylindrical cavity 23. The cylindrical cavity 23 is therefore delimited by said opening 22, a lateral wall 24A, 24B and a bottom 25. Furthermore, the internal cavity 23 is passed through by a thread 26 which according to the invention extends from the opening 22 until it only partially passes through the length of the cavity. In other words, the internal cavity comprises a first portion 24A of the side wall provided with a thread 26 and a second smooth portion 24B.

In addition, it should be observed that the section of the internal cavity 23 has a different diameter between said first portion 24A of the side wall, and that is the threaded portion, and the second portion 24B, and that is the smooth portion (figure 1B). In particular, the diameter of the first portion is smaller than the diameter of the second portion 24B so that the engagement with a fixing screw of a structure to be anchored is obtained only with said first portion.

This difference of diameters is also present on the outer surface so as to create a first portion 2A of the shank or with smaller diameter with respect to a second portion 2B of the shank. As a result, between said two portions there is formed an annular step 27 on the outer surface of the shank (figure 1A and 1B).

The advantage of this structure lies in creating a further retention point on the concrete against tensile forces in the direction longitudinal to the bushing, as well as the retention typical of the head 3. As a result, the performances of the bushing are increased with respect to the bushing of the prior art. In addition, the annular step 27 forms a flaring of the shank with a conical shape adapted to discharge at least part of the tensile forces in the transversal direction with respect to the axis X-X of the shank, with the further advantage of increasing the strength of the bushing.

The difference between the diameters between the first portion 2A and the second portion 2B of the outer surface of the shank is preferably identical to the difference between the diameters of the first portion 24A and the second portion 24B of the internal cavity 23. Although the diameters may change depending on the particular needs or preferences due to the specific type of use, that is on the structure to be anchored, preferably the ratios between the diameter of the second portion and the first, both inside and outside the shank, varies from 1:0.7 to 1:0.9, while the ratio between the inner and outer diameter of each of the first 2A and second 2B portions is between 1:1.3 and 1:1.5. It has been observed that advantageously in this range the bushing has the best performance in terms of strength despite the engagement with a screw not involving the entire length of the screw, as better explained below.

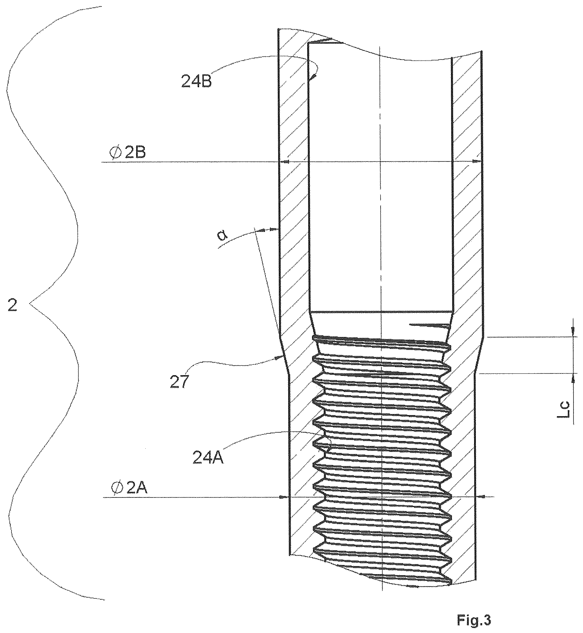

Furthermore, with reference to figure 3, the annular step 27 has an inclination angle $\alpha$ with respect to the outer wall of the second portion 2B comprised between 15° and 30° and its axial extension Lc in mm meets the condition below:

$$0.087 \bullet \text{Ø2B} \leq L_C \leq 0.56 \bullet \text{Ø2B}$$

wherein Ø2B is the outer diameter of the second portion 2B in mm.

With regard to the head 3 of the bushing, it should be observed that it can be of any shape, round, elliptical, polygonal. Preferably, it is square-shaped, as shown in figure 1C, or rectangular-shaped. Furthermore, the polygonal-shaped edges of the head can be sharp or rounded. In any case, such head is entirely conventional and therefore it will not be described further in detail.

As shown in figure 2, a further advantage of the structure of the bushing 1 of the present invention described above stems from the fact that upon screwing a screw 5 of a structure to be anchored into the cavity 23 of the bushing 1, there is formed an annular space 4 between the end portion of the screw and the second portion 24B of the side wall of the cavity. With this configuration, experimental tests have shown that in the event of oscillations or forces transversal to the axis X-X of the bushing, without being bound to specific theories, the annular space 4 would allow a sort of compensation or elastic discharge which would help to prevent transversal breakage and, as explained above, increase resistance against stresses allowed by the lateral discharge of the longitudinal tensile forces due to the aforementioned annular step 27.

A further object of the present invention is the use of the bushing described above for anchoring support structures to the concrete. In particular, the bushing is embedded in the concrete so that at least the opening 22 of the shank 2 thereof is free from the concrete to receive a corresponding fixing screw of an anchoring structure for devices, equipment, tools or similar objects which must be firmly anchored to a base.

It should be observed that according to the present invention, preferably the bushing is advantageously provided through a manufacturing method comprising a preliminary step of providing a metal wire or a bar or a piece of a metal rod. From this single piece of metal material, the bushing is obtained through plastic deformation and preferably cold moulding on a multistation progressive press. Therefore, the bushing consists of a single whole and integrally joined part without fissures or dents clearly with the advantage of being sealed at the portion which is embedded in the concrete; this avoids the risk of infiltration of liquids of the concrete when embedding the bushing thereinto that is when the concrete is cast into the mould of the product for example consisting of a support plate in concrete.

Preferably, the initial metal piece is a drawn steel rod, through a sequence of processing operations in series through plastic deformation, heading, and reverse extrusion by means of cold moulding, there is provided the bushing according to the present invention. Specifically, the method consists in forming/cold moulding a piece drawn by means of a defined sequence of operations in different stations, (the more they are, the simpler the processing and the better the technical result) which comprise the steps of:

- in a first station the drawn piece undergoes squaring and pre-chamfering of the hole;
- subsequently in a second station the drawn piece undergoes a first reverse extrusion step which carries out a partial drilling of approximately 50% of the size of the hole;

- subsequently, the hole is completed in a third step, still through reverse extrusion;
- the pre-shaping of the head is carried out in a subsequent fourth step;
- the head is completed in a subsequent fifth step;
- in a sixth step, there is carried out the open extrusion which confers the correct diameter for the thread of the hole and the change of section between the aforementioned first and second portions of the shank;
- lastly, the workpiece undergoes a tapping and galvanising step, so as to provide the bushing ready for use.

The aforementioned steps are carried out using conventional equipment whose working conditions, such as pressure values, are progressively adjusted depending on the specific characteristics of the treated material and/or the dimensions depending on the final use the bushing is designed for or depending on specific customer needs and requests. In particular, the sixth extrusion step for forming diameters, in other words, is a partial reduction of the diameter which, as explained, offers greater retention in the concrete.

In the light of the above, it is clear that the bushing of the present invention overcomes the drawback described above while attaining significant advantages at the same.

First and foremost, this allows to avoid the poor resistance to the tensile forces to which the bushings are subjected so as to anchor support structures to the concrete according to the prior art. As a matter of fact, it has been surprisingly observed that there is no need for the full engagement between the entire length of an anchoring screw and the corresponding bushing. As a matter of fact, it is sufficient to engage about half of the length to obtained an improved tensile strength.

Furthermore, it has been observed that the aforementioned flaring which determines solely the partial engagement between the screw and the bushing, also advantageously creates an annular step on the outer surface of the shank of the bushing capable of creating a further important point for anchoring to the concrete, besides the head.

In addition, the step is also formed in the internal cavity of the shank so as to divide it into a threaded portion for engagement with the screw and a vacant portion, the engagement portion consisting in the distal threaded portion with respect to the head while the non-threaded portion is proximal to the head of the bushing. Therefore, it should be observed that the thread in the internal cavity of the shank should not be necessarily obtained throughout the wall thereof. This means that during production, the tapping of the bushing may be reduced by at least 50% with resulting significant reduction of the processing times for producing the finished bushing.

The form of the bushing as a single piece also allows to advantageously avoid margins, edges or connection points between different pieces which can facilitate infiltrations of liquids especially in the concrete, which can seep into the bushing causing weakening or wear in the material.

The bushing of the present invention may be subjected - by a person skilled in the art - to numerous modifications and variants without departing from the scope of protection as defined by the attached claims.

For example, besides steel, the materials with which the bushing can be made may be metal alloys.

The cross-section of the shank may be of various shapes, while maintaining the cavity cylindrical-shaped, such as for example square-shaped or generally polygonal-shaped.

Furthermore, the cross-section of the shank may also be more than a step so as to further increase retention on the concrete.

The dimensions in length and width may vary depending on the final use; for example, in order to anchor photovoltaic panels, the cavity of the bushing must be such to allow the insertion of the screw for a length of 40 mm with an engagement which can also measure only 16.5 mm and with an inner diameter of 8.5 mm of the non-threaded portion and an inner diameter of the threaded portion measuring 8 mm, capable of meeting the requirements in force for an M8 screw.

It should also be observed that the forming method described above allows to obtain bushings with a head measuring 40 mm in length and width, a result that can be obtained only through the prior art that is by separately forming the shank and head and then assembling them together. Obviously, in the light of the above, this method entails the drawbacks regarding the liquid infiltration points of the concrete with the aforementioned consequential wear and potential breakage.

**Claims**

1. Bushing (1) for anchoring support structures into concrete, comprising a shank (2) which extends straight along an axis (X-X) from a first (20) to a second (21) end and a head (3) connected to said first end so as to form a T in longitudinal section, the shank (2) having a cylindrical cavity (23) whose side wall (24A,24B) is passed through by thread (26), **characterised in that** the shank (2) comprises a first portion (2A) which extends from said second end (21) towards the head (3) made of a single piece with a second portion (2B) through an annular step (27) so that the first portion (2A) has a smaller diameter than the second portion (2A), and **in that** only a first portion (24A) of the side wall of the cavity (23), corresponding to said first portion (2A) of the stem, is passed through by said thread (26).

2. Bushing (1) according to claim 1, wherein said annular step (27) forms a flare of the shank (2) with a conical shape.

3. Bushing (1) according to claim 1 or 2, wherein the ratio between the diameter of the second portion (2B) and the first portion (2A) of the shank (2) ranges from 1:0,7 to 1:0,9, the ratio between the inner and outer diameter of each of the first 2A and second 2B portions is between 1:1,3 and 1:1,5, the annular step (27) has an inclination angle $\alpha$ with respect to the outer wall of the second portion 2B comprised between 15° and 30° and the axial extension Lc thereof in mm meets the following condition:

$$0.087 \bullet \text{\O}2B \leq L_C \leq 0.56 \bullet \text{\O}2B$$

wherein Ø2B is the outer diameter of the second portion 2B in mm.

4. Bushing (1) according to any one of claims 1 to 3, wherein said shank (2) and said head (3) are made as a single piece by cold-moulding from a single piece made of metallic material.

5. Use of a bushing (1) according to any one of claims 1 to 4, for anchoring a support structure to the concrete.

6. Process for producing a bushing (1) according to any one of claims 1 to 4, comprising the steps of:

   - providing a drawn piece;
   - in a first station the drawn piece undergoes squaring and pre-chamfering of the hole;
   - subsequently in a second station the drawn piece undergoes a first reverse extrusion step which carries out a partial drilling of approximately 50% of the size of the hole;
   - subsequently, the hole is completed in a third step, still through reverse extrusion;
   - the pre-shaping of the head (3) is carried out in a subsequent fourth step;
   - the head (3) is completed in a subsequent fifth step;
   - in a sixth step, there is carried out the open extrusion which confers the correct diameter for the thread (26) of the hole and the change of section between the first (2A) and second (2B) portions of the shank (2);
   - lastly, the workpiece undergoes a tapping and galvanising step, so as to provide the bushing (1) ready for use.

Fig.1B

Fig.1A

Fig.1C

Fig.2

Fig.3

Europäisches
Patentamt

European
Patent Office

Office européen
des brevets

## EUROPEAN SEARCH REPORT

**Application Number**

EP 25 16 0338

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 901 681 A (RAWLPLUG CO LTD) 25 July 1962 (1962-07-25) * the whole document * | 1-6 | INV. F16B37/14 E04B1/41 |
| X | FR 2 307 164 A1 (ARTEON MARCEL [FR]) 5 November 1976 (1976-11-05) * figure 1 * * page 1, lines 18-39 * | 1,2,5 | |
| A | US 4 083 162 A (REGAN JOSEPH F ET AL) 11 April 1978 (1978-04-11) * the whole document * | 1-6 | |
| A | US 1 416 433 A (ACKERMAN CHARLES N) 16 May 1922 (1922-05-16) * the whole document * | 1-6 | |

**TECHNICAL FIELDS SEARCHED (IPC)**

F16B
B21K
E04B

The present search report has been drawn up for all claims

| Place of search | Date of completion of the search | Examiner |
|---|---|---|
| Munich | 18 July 2025 | Schandel, Yannick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 0338

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | | Publication date | Patent family member(s) | Publication date |
|---|---|---|---|---|
| GB 901681 | A | 25-07-1962 | NONE | |
| FR 2307164 | A1 | 05-11-1976 | NONE | |
| US 4083162 | A | 11-04-1978 | NONE | |
| US 1416433 | A | 16-05-1922 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2307164

- GB 901681 A